Europäisches Patentamt

European Patent Office

Office européen des brevets

(19)

(11) Veröffentlichungsnummer: **0 260 564**
B1

(12) **EUROPÄISCHE PATENTSCHRIFT**

(45) Veröffentlichungstag der Patentschrift:
17.10.90

(51) Int. Cl.⁵: **B29B 7/76**

(21) Anmeldenummer: **87113036.5**

(22) Anmeldetag: **07.09.87**

(54) Verfahren und Vorrichtung zum Herstellen eines Kunststoff, insbesondere Schaumstoff bildenden fliessfähigen Reaktionsgemisches aus mindestens zwei fliessfähigen Reaktionskomponenten im Durchlauf.

(30) Priorität: **19.09.86 DE 3631898**
**01.10.86 DE 3633343**

(43) Veröffentlichungstag der Anmeldung:
**23.03.88 Patentblatt 88/12**

(45) Bekanntmachung des Hinweises auf die Patenterteilung:
**17.10.90 Patentblatt 90/42**

(84) Benannte Vertragsstaaten:
**DE FR GB IT**

(56) Entgegenhaltungen:
**EP-A- 0 085 876**
**EP-A- 0 111 718**
**DE-A- 2 065 819**
**DE-A- 2 145 547**
**DE-A- 3 603 430**
**FR-A- 2 211 342**
**FR-A- 2 299 578**
**GB-A- 2 163 360**

(73) Patentinhaber: **BAYER AG,**
**D-5090 Leverkusen 1 Bayerwerk(DE)**

(72) Erfinder: **Boden, Heinrich, Sperberweg 14,**
**D-5090 Leverkusen 3(DE)**
Erfinder: **Rentz, Bernard, Vincent-van-Gogh-Strasse 28,**
**D-5090 Leverkusen 1(DE)**
Erfinder: **Ersfeld, Heinrich, Biesenbach 23,**
**D-5090 Leverkusen 3(DE)**
Erfinder: **Nadolski, Klaus, Imbacher Weg 131,**
**D-5090 Leverkusen 3(DE)**

## Beschreibung

Die Erfindung betrifft ein Verfahren und eine Vorrichtung zum Herstellen eines Kunststoff, insbesondere Schaumstoff bildenden, fließfähigen Reaktionsgemisches aus mindestens zwei fließfähigen Reaktionskomponenten, wobei die Reaktionskomponenten durch eine Düsenöffnung dosiert in eine Mischzone injiziert werden, aus welcher das resultierende Reaktionsgemisch ausgetragen wird und welche anschließend gereinigt wird. Solch ein Verfahren und solch eine Vorrichtung sind aus der FR-A -2 299 578 bekannt.

Das eingangs beschriebene Verfahren gehört zu den verschiedenen Varianten der sogenannten RIM-Technik (Reaction-Injection-Moulding), wobei die Komponenten mittels Lochdüsen bzw. Nadelverschlußdüsen zur Gewährleistung einer ausreichenden Vermischung mit hohen Injektionsdrücken in eine Mischzone injiziert werden. Eine gute Vermischung wird umso schwieriger, je höher die Viskosität der Komponenten ist. Bei den hohen Durchlaufleistungen pro Zeiteinheit bei relativ geringen Gesamtmengen und damit kurzen Dosierzeiten von teilweise weniger als einer Sekunde machen sich sowohl Vor- und Nachlaufprobleme als auch Mischungsinhomogenitäten durch Fehlerstellen im Fertigteil bemerkbar. Man hat deshalb die Injektionsdrücke auf über 200 bar angehoben, um eine Strahlaufweitung und eine feine Tropfenverteilung zu erzielen. Dadurch wird jedoch die Belastung der Dosierpumpen sehr hoch und es besteht die Gefahr des Berstens von Schlauchleitungen. Die Düsenöffnungen müssen außerordentlich klein gehalten werden, was bei füllstoffhaltigen Komponenten Verstopfungen verursacht. Man hat deshalb schon versucht, diese Nachteile dadurch zu beseitigen, daß man die Komponenten aufgeheizt hat, um die Viskosität herabzusetzen. Damit ist aber bei einigen Komponenten eine reduzierte Lagerbeständigkeit und der erforderliche Energieaufwand sowie gegebenenfalls eine erhöhte Reaktivität in Kauf zu nehmen. Durch Nachvermischung kann man zwar eine graduelle Verbesserung der Mischgüte erzielen, jedoch keine Lösung der Vor- und Nachlaufprobleme. Bei der Nachvermischung entstehen außerdem Materialverluste und es treten Säuberungsprobleme bei der Verarbeitung sogenannter selbsttrennender Systeme auf.

In keinem Falle wurde bisher das Ziel erreicht, die anerkannten Vorteile der RIM-Technik, nämlich einfacher Aufbau des Mischkopfes, Selbstreinigung der Mischkammer, einfache Steuerung, gute Dauergebrauchstüchtigkeit, zu nutzen und gleichzeitig die bestehenden Probleme, wie homogene Vermischung und Rezepturtreue vom ersten bis zum letzten Tropfen des Reaktionsgemisches beim Eintragen in einen Formhohlraum und damit fehlerfreie Fertigteile, gegebenenfalls ganz ohne Angußverluste, zu erhalten, zu lösen. Diese Probleme treten in verstärktem Maße bei der Verarbeitung höherviskoser Reaktionskomponenten auf.

Es besteht die Aufgabe, die sogenannte RIM-Technik so zu verbessern, daß unter Nutzung ihrer oben beschriebenen Vorteile eine homogene Vermischung und exakte Rezepturtreue über den gesamten Mischvorgang bei gegebenenfalls niedrigeren Injektionsdrücken erreicht wird, damit den heutigen Anforderungen an die Qualität der herzustellenden Fertigteile Genüge getan ist.

Diese Aufgabe wird dadurch gelöst, daß mindestens einer der Komponentenstrahlen nach dem Passieren der Düsenöffnung, aber vor dem Eintritt in die Mischzone durch Aufprall, abgelenkt und dabei aufgeweitet wird.

Dadurch wird erreicht, daß der Komponentenstrahl nahezu unmittelbar nach dem Austreten aus der Düsenöffnung, welche in aller Regel den engsten Düsenquerschnitt darstellt, gegen eine Ablenkfläche prallt und infolge des Einstellwinkels dieser Ablenkfläche sich teils selbst durchdringt, wodurch die Bildung besonders feiner Tropfen gefördert wird. Beim Ablenken weitet sich der Komponentenstrahl bereits etwas auf und diese Aufweitung setzt sich auf seinem Weg in die Mischkammer fort. Es versteht sich, daß der Grad der Aufweitung vom Injektionsdruck, der Viskosität der Komponente, dem Auftreffwinkel und der Konturierung der Ablenkfläche abhängig ist. Selbstverständlich ist es besonders vorteilhaft, wenn alle zugeführten Komponentenstrahlen abgelenkt werden. Dabei kann es durchaus von Nutzen sein, daß die Ablenkung unter verschiedenen Bedingungen, wie beispielsweise unterschiedlichen Winkeln, erfolgt.

Vorzugsweise wird der Strahl schräg entgegen der Ausströmrichtung aus der Mischzone abgelenkt.

Dadurch wird erreicht, daß die zu Beginn des Mischvorganges zuerst eingebrachten Komponentenanteile den Komponentenstrahl auf ihrem Wege zur Mischkammer nochmals durchdringen müssen, wobei eine Nachvermischung entsteht und die zuletzt eingebrachten Komponentenanteile eine Nachvermischung mit den kurz zuvor eingebrachten Komponentenanteilen erfahren.

Gemäß einer weiteren Ausführungsform wird der Strahl nach dem Ablenken über eine Abreißkante geführt.

Durch diese Verfahrensweise wird eine besonders dünne Ausbildung des Strahles erreicht, wodurch die Bildung feinster Tröpfchen begünstigt wird. Auch eine gleichmäßigere Durchdringung und Vermischung der verschiedenen Komponentenstrahlen, vor allem zu Beginn und Ende des Mischvorganges, wird gefördert.

Jede dieser Maßnahmen trägt zu einer Aufweitung des Komponentenstrahles und damit zu einer guten Vermischung bei, so daß jetzt mit niedrigeren Injektionsdrücken gearbeitet werden kann, um vergleichsweise die gleiche Vermischungsgüte zu erzielen wie früher mit höheren Injektionsdrücken. Da man in der Regel mit geringeren Injektionsdrücken auskommt, kann man größere Düsenöffnungsdurchmesser wählen, wodurch die Verstopfungsgefahr, insbesondere bei der Verarbeitung füllstoffhaltiger Reaktionskomponenten, herabgesetzt wird.

Besonders vorteilhaft läßt sich das neue Verfahren für selbstreinigende Mischzonen anwenden.

Die Vorrichtung zum Herstellen eines Kunststoff, insbesondere Schaumstoff bildenden fließfähigen Reaktionsgemisches aus mindestens zwei fließfähigen, dosiert zugeführten Reaktionskomponenten im Durchlauf geht aus von Vorratsbehältern für die Reaktionskomponenten, von denen Zuführungsleitungen über Dosierpumpen zu Düsenöffnungen führen, welche in die Mischkammer eines Mischkopfes weisen, wobei die Mischkammer eine Auslaßöffnung und gegebenenfalls einen Ausstoßkolben aufweist.

Das Neue ist darin zu sehen, daß zwischen mindestens einer der Düsenöffnungen und der Mischkammer eine Prall- bzw. Ablenkfläche angeordnet ist.

Je nach Anordnung zu der Lage der Düsenöffnung wirkt die Ablenkfläche mehr als Gleitfläche oder mehr als Prallfläche. Dies ist abhängig vom Einstellwinkel der Ablenkfläche sowie davon, ob die Ablenkfläche unmittelbar an der Düsenöffnung ansetzt oder ob sie davon Abstand aufweist. Je nach den Eigenschaften der zu injizierenden Komponente, insbesondere deren Viskosität, ist die Wahl in der einen oder anderen Richtung von größerem Vorteil. Es versteht sich, daß vorzugsweise jeder Düsenöffnung eine Ablenkfläche zugeordnet ist, wobei jede ihre besondere Ausgestaltung entsprechend den Erfordernissen durch die Reaktionskomponenten haben kann.

Vorzugsweise steigt die Prall- bzw. Ablenkfläche in Gegenrichtung zur Auslaßöffnung der Mischkammer an.

Die hiermit zu erzielenden Vorteile sind bereits im Zusammenhang mit dem entsprechenden Verfahrensschritt beschrieben.

Gemäß einer weiteren besonderen Ausführungsform weist die Prall- bzw. Ablenkfläche zur Mischkammer hin eine Abreißkante auf.

Vorzugsweise ist diese Abreißkante quer zur Mischkammerachse angeordnet. Handelt es sich um einen Mischkopf mit Ausstoß- und Steuerkolben, so ergibt sich der besondere Vorteil, daß die effektiven Schließ- und Öffnungsvorgänge der Eintrittsöffnungen in die Mischkammer durch den Ausstoßkolben außerordentlich günstig verlaufen, weil der abgelenkte Strahl beim Eintritt in die Mischkammer besonders flach ist und deshalb schlagartig freigegeben oder unterbrochen wird. Es versteht sich, daß der Ausstoßkolben in an sich bekannter Weise gleichzeitig als Steuerkolben ausgebildet sein kann. Ist kein Ausstoßkolben vorgesehen, muß die Mischkammer gespült werden.

Gemäß einer weiteren besonderen Ausführungsform weist die Prall- bzw. Ablenkfläche eine Konturierung auf.

Als Konturierung sind die verschiedensten Ausführungsformen möglich: eine konvexe oder konkave Krümmung; eine offene kanalartige Ausbildung, welche sich in Richtung zur Mischkammer verjüngt oder erweitert; feine Rillen, welche längs, quer oder schräg auf der Ablenkfläche angeordnet sind; winzige, durch sich kreuzende Rillen gebildete Erhebungen. Je nach den Eigenschaften der zu injizierenden Komponente ist die eine oder andere Art der Konturierung oder gegebenenfalls Kombinationen davon vorteilhaft.

Gemäß einer ersten Ausführungsform ist die Prall- bzw. Ablenkfläche unmittelbar im Düsenkörper einer Einspritzdüse angeordnet.

Was die Montage betrifft, hat diese Ausführungsform den Vorteil, daß es sich um ein einziges Stück handelt; nachteilig ist jedoch, daß bei Benötigung einer anders gestalteten Ablenkfläche oder eines anderen Abstandes der Ablenkfläche von der Düsenöffnung die gesamte Einheit ausgetauscht werden muß.

Als Alternative ist deshalb die Prall- bzw. Ablenkfläche in einem Einsatzstück angeordnet.

Diese Ausführungsform hat den Vorteil, daß unter Verwendung der gleichen Einspritzdüse jeweils nur das Einsatzstück ausgetauscht zu werden braucht.

Eine weitere besondere Ausführungsform ist durch ein gemeinsames Einsatzstück für alle Prallbzw. Ablenkflächen gekennzeichnet, wobei dieses Einsatzstück die Mischkammer enthält.

Dies hat den Vorteil, daß dieses Einsatzstück komplett auswechselbar ist.

Es ist möglich, die Einspritzdüsen unabhängig von diesem Einsatz im Mischkopfgehäuse zu lagern. Vorzugsweise jedoch weist das Einsatzstück Ausnehmungen auf, in denen die Einspritzdüsen austauschbar angeordnet sind.

Auf diese Weise ist es möglich, den gleichen Einspritzdüsen ein anderes gemeinsames Einsatzstück oder dem gleichen Einsatzstück andere Einspritzdüsen zuzuordnen. Letzteres ist von Vorteil, wenn wegen der spezifischen Bedingungen der Komponentenströme andere Düsenöffnungsquerschnitte verwendet werden müssen.

Ein gemeinsames Einsatzstück hat den besonderen Vorteil, daß wegen der fixen Lage aller kritischen Abstände zueinander besondere Justierungsarbeiten entfallen. Dadurch werden insbesondere Vor- und Nachlaufprobleme beim Freigeben und Verschließen der Einsatzöffnungen durch einen Ausstoß- und Steuerkolben vermieden.

Diese Ausführungsform bietet den weiteren besonderen Vorteil, daß der Abstand der Prall- bzw. Ablenkfläche zur Düsenöffnung einstellbar ist.

Diese Einstellbarkeit läßt sich in einfacher Weise dadurch bewerkstelligen, daß man zwischen Einspritzdüse und Einsatzstück Distanzringe entsprechender Stärke einlegt.

Est ist auch möglich, die Einspritzdüse verschiebbar zu lagern, so daß durch Verschieben der Abstand zur Ablenkfläche einstellbar ist. Dies ist natürlich konstruktiv sehr aufwendig.

Die Einspritzdüse läßt sich auch in einer Kugel oder einem Kugelsegment lagern, so daß der Winkel zwischen der Achse der Einspritzdüse und der Ablenkfläche einstellbar ist.

Auch diese Ausführungsform ist außerordentlich aufwendig und dürfte nur für ganz spezielle Fälle in Frage kommen.

Vorzugsweise ist der Prall- bzw. Ablenkfläche eine Gegenfläche zugeordnet, welche zur Mischkammer hin miteinander einen definierten Einlaßspalt bilden.

Es versteht sich, daß dieser Einlaßspalt einen größeren Querschnitt besitzt als diese Düsenöffnung.

In der Zeichnung ist die neue Vorrichtung in mehreren Ausführungsbeispielen rein schematisch dargestellt und nachstehend näher erläutert. Es zeigen:

Fig. 1 die Vorrichtung im Aufbauschema,

Fig. 2 ein erstes Ausführungsbeispiel des Mischkopfes der Vorrichtung im Schnitt,

Fig.3 ein zweites Ausführungsbeispiel des Mischkopfes im Schnitt,

Fig. 4 eine Stirnansicht auf eine der in die Mischkammer weisenden Eintrittsöffnungen des Mischkopfes gemäß Fig. 3,

Fig. 5 einen Schnitt gemäß Linie A-B in Fig. 3,

Fig. 6 ein drittes Ausführungsbeispiel des Mischkopfes im Schnitt,

Fig. 7 die Stirnansicht auf eine der in die Mischkammer weisenden Eintrittsöffnungen des Mischkopfes gemäß Fig. 6,

Fig. 8 ein viertes Ausführungsbeispiel des Mischkopfes im Schnitt,

Fig. 9 ein fünftes Ausführungsbeispiel des Mischkopfes im Schnitt und

Fig. 10 ein sechstes Auführungsbeispiel des Mischkopfes im Schnitt.

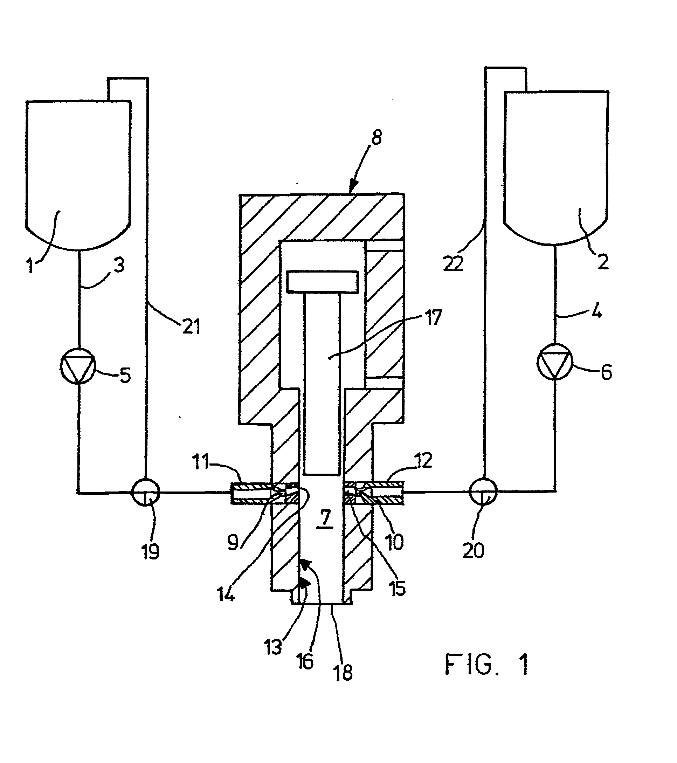

In Figur 1 führen von einem Vorratsbehälter 1 für Polyol und einem Vorratsbehälter 2 für Isocyanat Zuführungsleitungen 3, 4 über Dosierpumpen 5, 6 zur Mischkammer 7 eines im Aufbau schematisch angedeuteten Mischkopfes 8. Sie führen zu mit Düsenöffnungen 9, 10 versehenen Einspritzdüsen 11, 12. Die Düsenöffnungen 9, 10 weisen durch die eigentlichen, in der Wandung 13 der Mischkammer 7 angeordneten Eintrittsöffnungen 14, 15 in die Mischkammer 7 hinein. Die Mischkammer 7 ist Teil einer Führungsbohrung 16, in welcher ein Ausstoßkolben 17 geführt ist, welcher nach dem Mischvorgang vorgeschoben wird, dabei das in der Mischkammer 7 befindliche restliche Gemisch ausstößt und die Mischkammer 7 bis zur Auslaßöffnung 18 ausfüllt. In den Zuführleitungen 3, 4 sind kurz vor dem Mischkopf 8 Umschaltventile 19, 20 angeordnet, von welchen Rücklaufleitungen 21, 22 zu den Vorratsbehältern 1, 2 zurückführen. In den weiteren Figuren ist der Mischkopf 8 in verschiedenen Ausführungsbeispielen vergrößert dargestellt.

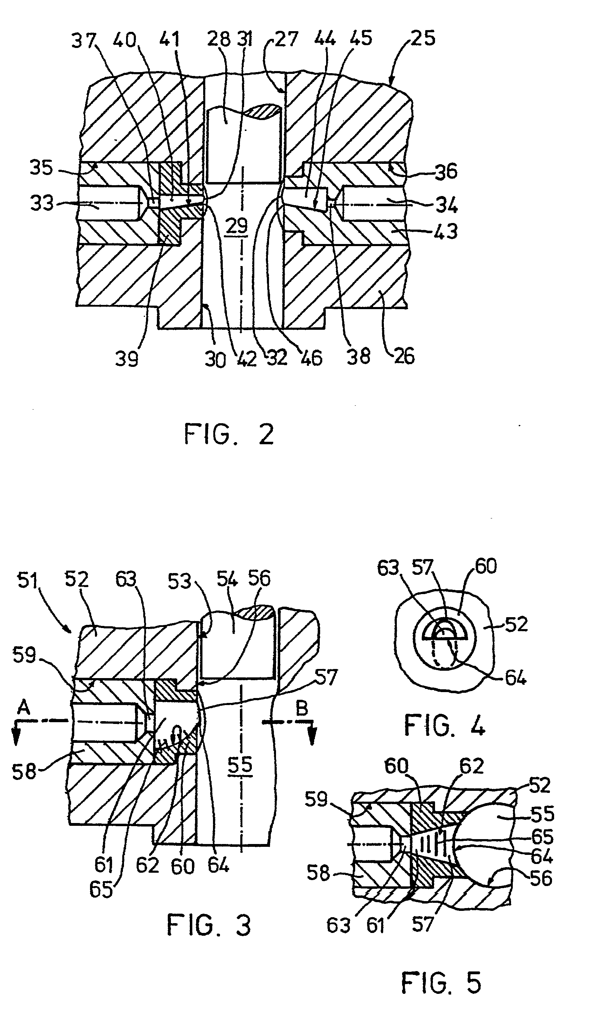

In Figur 2 besteht der Mischkopf 25 aus einem Gehäuse 26, in welchem eine Führungsbohrung 27 für einen Ausstoßkolben 28 angeordnet ist. In der dargestellten Stellung gibt der Ausstoßkolben 28 eine Mischkammer 29 und die in der Wandung 30 der Mischkammer 29 angeordneten Eintrittsöffnungen 31, 32 frei. Nicht dargestellte Zuführungsleitungen für die Reaktionskomponenten münden in Einspritzdüsen 33, 34, welche in Gehäusebohrungen 35, 36 angeordnet sind und Düsenöffnungen 37, 38 aufweisen.

Zwischen Einspritzdüse 33 und Mischkammer 29 ist ein Einsatzstück 39 gegen Verdrehen gesichert angeordnet. Es weist einen Kanal 40 auf, dessen Boden als ebene Ablenkfläche 41 gestaltet ist. Diese Ablenkfläche 41 beginnt am unteren Rand der Düsenöffnung 37 und steigt unter einem Winkel von 10° zur Achse der Einspritzdüse 33 an, so daß der austretende Gemischstrahl im wesentlichen an der Ablenkfläche 41 entlanggleitet. Das Einsatzstück 39 ist zur Mischkammer 29 hin deren Wandung 30 angepaßt. Dabei bildet das zur Mischkammer 29 hin gelegene Ende der Ablenkfläche 41 eine scharfe Abreißkante 42, welche quer zur Achse der Mischkammer 29 ausgerichtet ist. Die Einspritzdüse 34 besteht aus einem Düsenkörper 43, welcher über die Düsenöffnung 38 hinaus verlängert ist. Innerhalb dieser Verlängerung ist ein Kanal 44 angeordnet, dessen Boden ebenfalls als Ablenkfläche 45 gestaltet ist. Diese Ablenkfläche 45 beginnt etwa 1 mm unterhalb der Düsenöffnung 38, so daß der aus ihr austretende Strahl auf die unter dem Winkel von 10° eingestellte Ablenkfläche 45 schräg aufprallt und nach oben abgelenkt wird. Die Ablenkfläche 45 endet zur Mischkammer 29 hin mit einer scharfen Abreißkante 46, welche Teil der Begrenzung der Eintrittsöffnung 32 darstellt.

In Figuren 3 bis 5 besteht der Mischkopf 51 aus einem Gehäuse 52, in welchem eine Führungsbohrung 53 für einen Ausstoßkolben 54 angeordnet ist. In der dargestellten Stellung gibt der Ausstoßkolben 54 die Mischkammer 55 und die in der Wandung 56 der Mischkammer 55 angeordnete Eintrittsöffnung 57 frei. Der Vereinfachung halber ist nur eine Einspritzdüse 58 dargestellt, zu welcher eine nicht dargestellte Zuführungsleitung führt. Die Einspritzdüse 58 ist in einer Gehäusebohrung 59 angeordnet. Zwischen der Einspritzdüse 58 und der Mischkammer 55 ist ein Einsatzstück 60 vorgesehen, welches einen Kanal 61 aufweist, dessen Boden als Ablenkfläche 62 gestaltet ist. Diese Ablenkfläche 62 beginnt etwas unterhalb der Düsenöffnung 63, ist muldenförmig gestaltet und läuft nach oben zur Mischkammerwandung 56 bzw. zur Eintrittsöffnung 57 flach aus und bildet dort eine scharfe Abreißkante 64. Diese ist quer zur Achse der Mischkammer 55 ausgerichtet. Die Oberfläche der Ablenkfläche 62 weist eine Konturierung 65 in Form von Querrillen von 0,3 mm Tiefe auf.

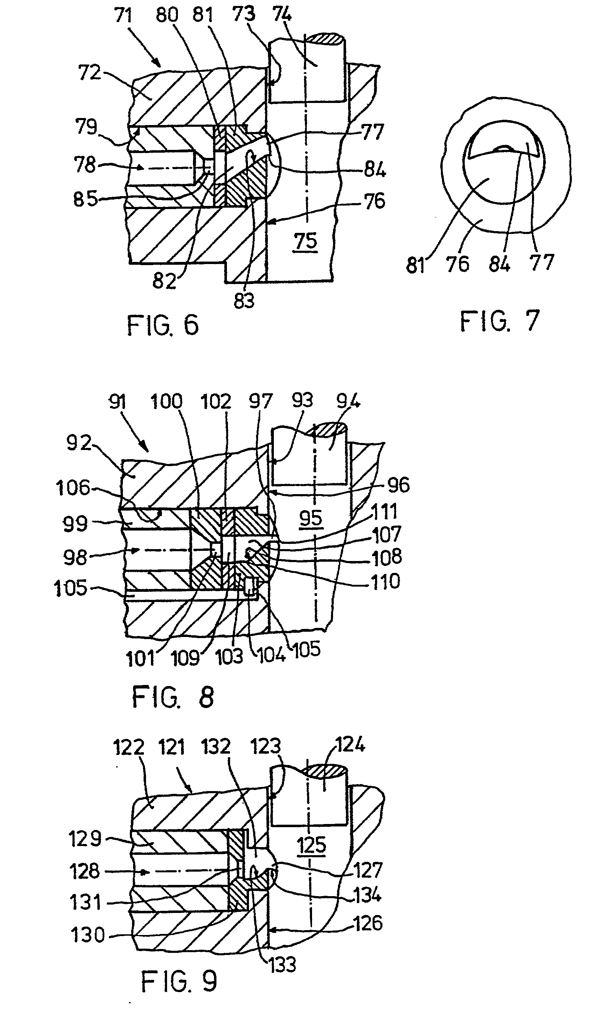

In Figur 6, 7 besteht der Mischkopf 71 aus einem Gehäuse 72, in welchem eine Führungsbohrung 73 für einen Ausstoßkolben 74 angeordnet ist. In der dargestellten Stellung gibt der Ausstoßkolben 74 die Mischkammer 75 und die in der Wandung 76 der Mischkammer 75 angeordnete Eintrittsöffnung 77 frei. Der Vereinfachung halber ist nur eine Einspritzdüse 78 dargestellt, zu welcher eine nicht dargestellte Zuführungsleitung führt. Die Einspritzdüse 78 ist in einer Gehäusebohrung 79 angeordnet. Zwischen der Einspritzdüse 78 und der Mischkammer 75 sind eine gelochte Distanzscheibe 80 sowie ein Einsatzstück 81 gegen Verdrehen gesichert angeordnet. Letzteres weist einen schräg nach oben ansteigenden Kanal 82 auf, dessen Boden als Ablenkfläche 83 ausgebildet ist. Diese Ablenkfläche 83 beginnt etwas unterhalb der Düsenöffnung 85, ist konvex gekrümmt und läuft in der Eintrittsöffnung 77 in eine Abreißkante 84 aus.

In Figur 8 besteht der Mischkopf 91 aus einem Gehäuse 92, in welchem eine Führungsbohrung 93 für einen Ausstoßkolben 94 angeordnet ist. In der dargestellten Stellung gibt der Ausstoßkolben 94 die Mischkammer 95 und die in der Wandung 96 angeordnete Eintrittsöffnung 97 frei. Der Vereinfachung halber ist nur die Einspritzdüse 98 dargestellt. Eine gleichgestaltete Düse läge in der gleichen Achse spiegelbildlich gegenüber. Zu der Einspritzdüse 98 führt eine nicht dargestellte Zuführungsleitung. Die Einspritzdüse 98 besteht aus dem eigentlichen Düsenkörper 99 und einer Lochblende 100 mit Düsenöffnung 101. Zwischen der Lochblende 100 und der Mischkammer 95 ist eine Distanzscheibe 102 sowie ein Einsatzstück 103 angeordnet. Dieses Einsatzstück 103 ist mit einem Zapfen 104 versehen, welcher in eine Nut 105 eingreift und auf diese Weise ein Verdrehen des Einsatzstückes 103 verhindert. Alle diese Teile sind in einer Gehäusebohrung 106 angeordnet. Das Einsatzstück 103 weist einen Kanal 107 auf, dessen Boden als Ablenkfläche 108 ausgebildet ist. Diese Ablenkfläche 108 beginnt am unteren Rand des Loches 109 der Distanzscheibe 102 und damit tiefer als der untere Rand der Düsenöffnung 101 positioniert ist. Die Ablenkfläche 108 steigt zur Mischkammer 95 nach oben an, wobei sie eine Knickstelle 110 aufweist, hinter welcher sie noch stärker ansteigt. Die Eintrittsöffnung 97 besitzt hier infolge einer zugeordneten Gegenfläche 112 die Form eines engen Einlaßspaltes, welcher sich quer zur Achse der Mischkammer 95 erstreckt. Sein unterer Rand ist gleichzeitig als Abreißkante 111 ausgebildet.

In Figur 9 besteht der Mischkopf 121 aus einem Gehäuse 122, in welchem eine Führungsbohrung 123 für einen Ausstoßkolben 124 angeordnet ist. In der dargestellten Stellung gibt der Ausstoßkolben 124 die Mischkammer 125 und die in der Wandung 126 der Mischkammer 125 angeordnete Eintrittsöffnung 127 frei. Der Vereinfachung halber ist nur eine der beiden in der gleichen Achse einander gegenüberliegend angeordneten Einspritzdüsen 128 eingezeichnet, zu welcher eine nicht dargestellte Zuführungsleitung führt. Die Einspritzdüse 128 besteht aus einem Düsenkörper 129 und einer Lochblende, welche mit einem Einsatzstück 130 eine Einheit bildet. Dieses Einsatzstück 130 weist eine Düsenöffnung 131 auf, an welche sich ein Kanal 132 anschließt, welcher bis zur Eintrittsöffnung 127 führt. Sein Boden ist als Ablenkfläche 133 ausgebildet. Diese beginnt am unteren Rand der Einspritzdüse 131 und steigt bogenförmig zur Eintrittsöffnung 127 an. Deren unterer Rand ist als Abreißkante 134 ausgebildet.

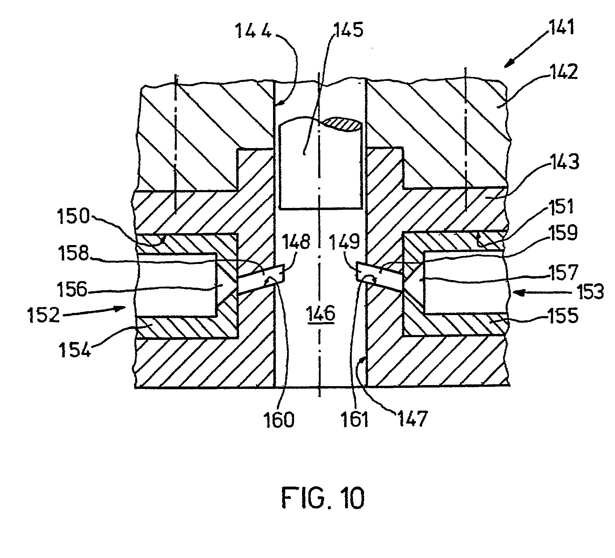

In Fig. 10 besteht der Mischkopf 141 aus einem Gehäuse 142, an welches ein zur Mittelachse spiegelsymmetrisches Einsatzstück 143 angeflanscht ist. Eine Führungsbohrung 144 des Gehäuses 142 für einen Ausstoßkolben 145 setzt sich axial durch das Einsatzstück 143 fort und bildet in diesem eine Mischkammer 146, wenn der Ausstoßkolben 145 die in der Wandung 147 der Mischkammer 146 angeordneten Eintrittsöffnungen 148, 149 freigibt. Das Einsatzstück 143 ist allen Einspritzöffnungen 148, 149 gemeinsam und weist Ausnehmungen 150, 151 auf, in welchen Einspritzdüsen 152, 153 austauschbar angeordnet sind. Zu ihnen führen nicht dargestellte Zuführungsleitungen. Die Einspritzdüsen 152, 153 bestehen aus Düsenkörpern 154, 155 mit Düsenöffnungen 156, 157. Zwischen Düsenöffnungen 156, 157 und den Eintrittöffnungen 148, 149 sind im Einsatzstück 143 Kanäle 158, 159 angeordnet, deren Böden als Ablenkflächen 160, 161 ausgebildet sind.

**Patentansprüche**

1. Verfahren zum Herstellen eines Kunststoff, insbesondere Schaumstoff bildenden, fließfähigen Reaktionsgemisches aus mindestens zwei fließfähigen Reaktionskomponenten, wobei die Reaktionskomponenten durch eine Düsenöffnung (1; 10, 37; 38, 63, 85, 101, 131, 156, 157) dosiert in eine Mischzone (7, 29, 55, 75, 95, 125, 146) injiziert werden, aus welcher das resultierende Reaktionsgemisch ausgetragen wird und welche anschließend gereinigt wird, dadurch gekennzeichnet, daß mindestens einer der Komponentenstrahlen nach dem Passieren der Düsenöffnung (1; 10, 37; 38, 63, 85, 101, 131, 156, 157) aber vor dem Eintritt in die Mischzone (7, 29, 55, 75, 95, 125, 146), durch Aufprall abgelenkt und dabei aufgeweitet wird.

2. Verfahren nach Anspruch 1, dadurch gekennzeichnet, daß der Strahl schräg entgegen der Ausströmrichtung aus der Mischzone (7, 29, 55, 75, 95, 125) abgelenkt wird.

3. Verfahren nach Anspruch 1 oder 2, dadurch gekennzeichnet, daß der Strahl nach dem Ablenken über eine Abreißkante (42; 46, 64, 84, 111, 134) geführt wird.

4. Vorrichtung zum Herstellen eines Kunststoff, insbesondere Schaumstoff bildenden, fließfähigen Reaktionsgemisches aus mindestens zwei fließfähigen, dosiert zugeführten Reaktionskomponenten im Durchlauf, bestehend aus Vorratsbehältern (1, 2) für die Reaktionskomponenten, von denen Zuführungsleitungen (3, 4) über Dosierpumpen (5, 6) zu Düsenöffnungen (9; 10, 37; 38, 63, 85, 101, 131, 156, 157) führen, welche in die Mischkammer (7, 29, 55, 75, 95, 125, 146) eines Mischkopfes (8, 25, 51, 71, 91, 121, 141) weisen, wobei die Mischkammer (7, 29, 55, 75, 95, 125, 146) eine Auslaßöffnung (18) und gegebenenfalls einen Ausstoßkolben (17, 28, 54, 74, 94, 124, 145) aufweist, dadurch gekennzeichnet, daß zwischen mindestens einer der Düsenöffnungen (9; 10, 37; 38, 63, 85, 101, 131, 156, 157) und der Mischkammer (7, 29, 55, 75, 95, 125, 146) eine Prall — bzw. Ablenkfläche (41; 45, 62, 83, 108, 133, 160, 161) angeordnet ist.

5. Vorrichtung nach Anspruch 4, dadurch gekennzeichnet, daß die Prall — bzw. Ablenkfläche (41; 45, 62, 83, 108, 133, 160, 161) in Gegenrichtung zur Auslaßöffnung (18) der Mischkammer (7, 29, 55, 75, 95, 125, 146) ansteigt.

6. Vorrichtung nach Anspruch 4 oder 5, dadurch gekennzeichnet, daß die Prall — bzw. Ablenkfläche (41; 45, 62, 83, 108, 133) zur Mischkammer (7, 29, 55, 75, 95, 125) hin eine Abreißkante (42; 46, 64, 84, 111, 134) aufweist.

7. Vorrichtung nach einem der Ansprüche 4 bis 6, dadurch gekennzeichnet, daß die Prall — bzw. Ablenkfläche (62) eine Konturierung (65) aufweist.

8. Vorrichtung nach einem der Ansprüche 4 bis 7, dadurch gekennzeichnet, daß die Prall — bzw. Ablenkfläche (45) unmittelbar im Düsenkörper (43) einer Einspritzdüse (34) angeordnet ist.

9. Vorrichtung nach einem der Ansprüche 4 bis 8, dadurch gekennzeichnet, daß die Prall – bzw. Ablenkfläche (41, 60, 81, 103, 130) angeordnet ist.

10. Vorrichtung nach Anspruch 9, gekennzeichnet, durch ein gemeinsames Einsatzstück (143) für alle Prall – bzw. Ablenkflächen (160, 161), wobei dieses Einsatzstück (143) die Mischkammer (146) enthält.

11. Vorrichtung nach Anspruch 10, dadurch gekennzeichnet, daß das gemeinsame Einsatzstück (143) Ausnehmungen (150, 151) aufweist, in denen die Einspritzdüsen (152, 153) austauschbar angeordnet sind.

12. Vorrichtung nach einem der Ansprüche 9 bis 11, dadurch gekennzeichnet, daß der Abstand der Prall – bzw. Ablenkfläche (83, 108) zur Düsenöffnung (85, 101) einstellbar ist.

13. Vorrichtung nach einem der Ansprüche 4 bis 12, dadurch gekennzeichnet, daß der Prall – bzw. Ablenkfläche (108) eine Gegenfläche (112) zugeordnet ist, welche zur Mischkammer (95) hin miteinander einen definierten Einlaßspalt (97) bilden.

## Revendications

1. Procédé de préparation d'un mélange réactionnel capable de couler formant une matière plastique, en particulier une mousse et consistant en au moins deux composants réactionnels capables de couler, les composants réactionnels étant injectés en étant dosés par une ouverture de buse (1; 10, 37; 38, 63, 85, 101, 131, 156, 157) dans une zone de mélange (7, 29, 55, 75, 95, 125, 146) de laquelle le mélange réactionnel résultant est extrait et qui est ensuite nettoyée, caractérisé en ce qu'au moins l'un des jets de composants est dévié par impact et est de ce fait élargi après le passage de l'ouverture de buse (1; 10, 37; 38, 63, 85, 101, 131, 156, 157) mais avant l'entrée dans la zone de mélange (7, 29, 55, 75, 95, 125, 146).

2. Procédé selon la revendication 1, caractérisé en ce que le jet est dévié de façon oblique par rapport à la direction de sortie de la zone de mélange (7, 29, 55, 75, 95, 125).

3. Procédé selon la revendication 1 ou 2, caractérisé en ce que le jet est guidé après la déviation sur une arête de détachement (42; 46, 64, 84, 111, 134).

4. Dispositif de préparation en continu d'un mélange réactionnel capable de couler formant une matière plastique, en particulier une mousse et consistant en au moins deux composants réactionnels capables de couler et introduits de façon dosée, qui consiste en récipients de stockage (1, 2) pour les composants réactionnels, desquels des conduites d'alimentation (3, 43 aboutissent par l'intermédiaire de pompes doseuses (5, 6) à des ouvertures de buse (9; 10, 37; 38, 63, 85, 101, 131, 156, 157) qui sont dirigées vers la chambre de mélange (7, 29, 55, 75, 95, 125, 146) d'une tête mélangeuse (8, 25, 51, 71, 91, 121, 141), la chambre de mélange (7, 29, 55, 75, 95, 125, 146) présentant une ouverture de sortie (18) et éventuellement un piston éjecteur (17, 28, 54, 74, 94, 124, 145), caractérisé en ce qu'une surface d'impact ou de déviation (41; 45, 62, 83, 108, 133, 160, 161) est disposée entre au moins l'une des ouvertures de buse (9; 10, 37; 38, 63, 85, 101, 131, 156, 157) et la chambre de mélange (7, 29, 55, 75, 95, 125, 146).

5. Dispositif selon la revendication 4, caractérisé en ce que la surface d'impact ou de déviation (41; 45, 62, 83, 108, 133, 160, 161) monte dans la direction opposée à l'ouverture de sortie (18) de la chambre de mélange (7, 29, 55, 75, 95, 125, 146).

6. Dispositif selon la revendication 4 ou 5, caractérisé en ce que la surface d'impact ou de déviation (41; 45, 62, 83, 108, 133) présente une arête de détachement (42; 46, 64, 84, 111, 134) en direction de la chambre de mélange (7, 29, 55, 75, 95, 125).

7. Dispositif selon l'une des revendications 4 à 6, caractérisé en ce que la surface d'impact ou de déviation (62) présente un contour (65).

8. Dispositif selon l'une des revendications 4 à 7, caractérisé en ce que la surface d'impact ou de déviation (45) est disposée immédiatement dans le corps de buse (43) d'une buse d'injection (34).

9. Dispositif selon l'une des revendications 4 à 8, caractérisé en ce que la surface d'impact ou de déviation (41, 62, 83, 108, 133) est disposée dans une pièce d'insertion (39, 60, 81, 103, 130).

10. Dispositif selon la revendication 9, caractérisé par une pièce d'insertion (143) commune pour toutes les surfaces d'impact ou de déviation (160, 161), cette pièce d'insertion (143) contenant la chambre de mélange (146).

11. Dispositif selon la revendication 10, caractérisé en ce que la pièce d'insertion commune (143) présente des évidements (150, 151) dans lesquels sont disposées les buses d'injection (152, 153) de façon à pouvoir être changées.

12. Dispositif selon l'une des revendications 9 à 11, caractérisé en ce que la distance entre la surface d'impact ou de déviation (83, 108) et l'ouverture de buse (85, 101) est réglable.

13. Dispositif selon l'une des revendications 4 à 12, caractérisé en ce qu'à la surface d'impact ou de déviation (108) est associée une contre-surface (112) qui forme avec celle-ci une fente d'entrée (97) définie en direction de la chambre de mélange (95).

## Claims

1. Method of producing a plastics material, in particular a foam-forming, flowable reaction mixture, from at least two flowable reactants, wherein the reactants are metered through a die orifice (1; 10; 37; 38, 63, 85, 101, 131, 156, 157) and injected into a mixing zone (7, 29, 55, 75, 95, 125, 146) from which the resultant reaction mixture is extracted and which is then cleaned, characterised in that at least one of the component jets, after passing through the die orifice (1; 10; 37; 38, 63, 85, 101, 131, 156, 157) but before entering the mixing zone (7, 29, 55, 75, 95, 125, 146), is deflected by rebounding and is thereby enlarged.

2. Method according to claim 1, characterised in that the jet is deflected from the mixing zone (7, 29, 55, 75, 95, 125) obliquely against the discharge direction.

3. Method according to claim 1 or 2, characterised in that the jet is guided, after deflection, over a breakaway edge (42, 46, 64, 84, 111, 134).

4. Apparatus for the production of a plastics material, in particular a foam-forming, flowable reaction mixture, from at least two flowable reactants supplied in a metered manner in a continuous stream, consisting of reservoirs (1, 2) for the reactants, from which supply conduits (3, 4) lead via metering pumps (5, 6) to die orifices (9; 10, 37; 38, 63, 85, 101, 131, 156, 157) which point into the mixing chamber (7, 29, 55, 75, 95, 125, 146) of a mixer head (8, 25, 51, 71, 91, 121, 141), the mixing chamber (7, 29, 55, 75, 95, 125, 146) having an outlet opening (18) and optionally an ejection piston (17, 28, 54, 74, 94, 124, 145), characterised in that a rebound or deflection face (41; 45, 62, 83 108, 133, 160, 161) is between at least one of the die orifices (9; 10, 37; 38, 63, 85, 101, 131, 156, 157) and the mixing chamber (7, 29, 55, 75, 95, 125, 146).

5. Apparatus according to claim 4, characterised in that the rebound or deflection face (41; 45, 62, 83, 108, 133, 160, 161) rises in the direction opposed to the outlet opening (18) of the mixing chamber (7, 29, 55, 75, 95, 125, 146).

6. Apparatus according to claim 4 or 5, characterised in that the rebound or deflection face (41; 45, 62, 83, 108, 133) has a breakaway edge (42; 46, 64, 84, 111, 134) toward the mixing chamber (7, 29, 55, 75, 95, 125).

7. Apparatus according to one of claims 4 to 6, characterised in that the rebound or deflection face (62)) has contouring (65).

8. Apparatus according to one of claims 4 to 7, characterised in that the rebound or deflection face (45) is arranged directly in the die body (43) of an injection nozzle (34).

9. Apparatus according to one of claims 4 to 8, characterised in that the rebound or deflection face (41, 62, 83, 108, 133) is arranged in an insert (39, 60, 81, 103, 130).

10. Apparatus according to claim 9, characterised by a common insert (143) for all rebound or deflection faces (160, 161), this insert (143) containing the mixing chamber (146).

11. Apparatus according to claim 10, characterised in that the common insert (143) has recesses (150, 151) in which the injection nozzles (152, 153) are exchangeably arranged.

12. Apparatus according to one of claims 9 to 11, characterised in that the distance between the rebound or deflection face (83, 108) and the die orifice (85, 101) is adjustable.

13. Apparatus according to one of claims 4 to 12, characterised in that the rebound or deflection face (108) is allocated an opposing face (112) which together form a defined inlet gap (97) toward the mixing chamber (95).

FIG. 1

FIG. 2

FIG. 3

FIG. 4

FIG. 5

EP 0 260 564 B1

FIG. 6

FIG. 7

FIG. 8

FIG. 9

FIG. 10